# EUROPEAN PATENT SPECIFICATION

(11) **EP 1 308 675 B1**
(45) Date of publication and mention of the grant of the patent: **31.12.2008**
(21) Application number: 02257652.4
(22) Date of filing: 05.11.2002
(51) Int. Cl.: F24C 3/06, F24C 3/12, F23D 14/16, F23D 14/60

(54) **Gas heater**
Gasheizgerät
Appareil de chauffage au gaz

(30) Priority: 05.11.2001 JP 2001339774
(43) Date of publication of application: 07.05.2003
(73) Proprietor: RINNAI KABUSHIKI KAISHA, Nagoya-shi, Aichi-ken (JP)
(72) Inventor: Sobue Tsutomu, Nakagawa-ki Nagoya-shi Aichi-ken (JP); Yano Koji, Nakagawa-ki Nagoya-shi Aichi-ken (JP); Yamada, Yutaka, Minato-ku Tokyo (JP)
(74) Representative: Fenlon, Christine Lesley

(56) References cited:
- EP-A- 0 601 270
- FR-A- 2 076 174

## Description

The present invention relates to a gas heater for heating an object placed on an upper panel above a combustion chamber without exposing flames.

### Description of the Related. Art:

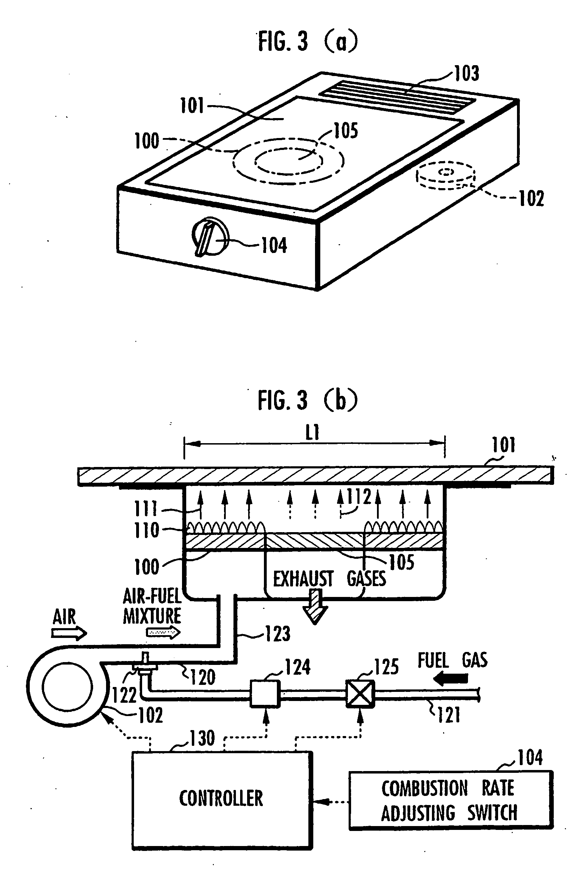

FIG. 3(a) of the accompanying drawings shows a previously considered gas heater having a combustion chamber which houses a burner 100 therein and a heat-resistant upper panel 101 of glass disposed above the combustion chamber. The gas heater heats an object that is placed on the upper panel 101 without exposing flames. An air supply/discharge fan 102 supplies combustion air to the burner 100, and a combustion gas from the burner 100 is discharged from an exhaust slot 103.

FIG. 3(b) of the accompanying drawings shows the previously considered gas heater in vertical cross section with some parts being illustrated in block form. As shown in FIG. 3(b), a controller 130 controls a gas proportional valve 124 to control the flow rate of a fuel gas that is supplied from a gas supply passage 121 through a nozzle 122 to a mixture pipe 123, according to a target combustion rate which is set for the burner 100 by a combustion rate adjusting switch 104 that adjusts the combustion rate of the burner 100. The controller 130 also controls the air supply/discharge fan 102 to control the flow rate of combustion air supplied to the mixture pipe 123.

The gas supply passage 121 has a main gas valve 125 at its end connected to the mixture pipe 123. A porous body 105 is disposed in a combustion gas exhaust passage defined in the burner 100. When the porous body 105 is heated by the heat of the combustion gas, the porous body 105 becomes red hot. When the burner 100 is in operation, it generates heat 111 from its surface due to combustion flames 110 that are produced by the combustion of the fuel gas, and the porous body 105 also generates radiant heat 112 as it becomes red hot. Therefore, the gas burner has a high thermal efficiency.

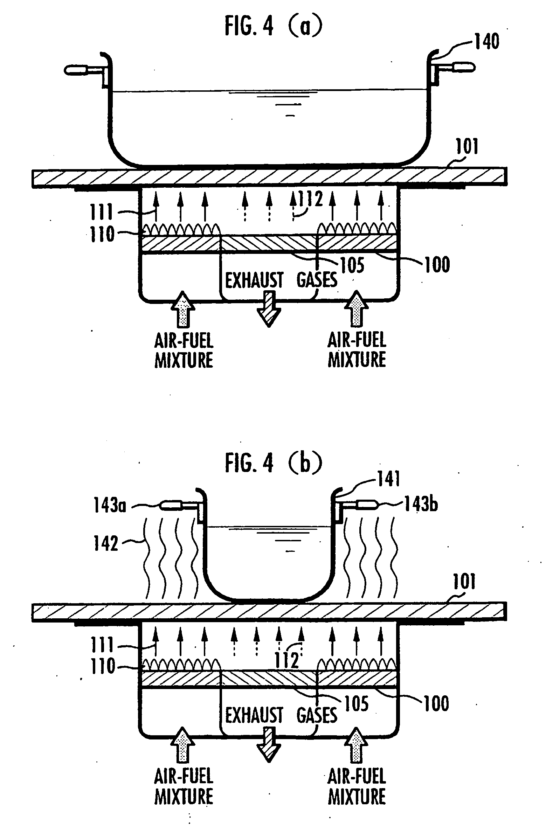

As shown in FIG. 4(a) of the accompanying drawings, when a pan 140 having a bottom area greater than the effective heating area (within a circle having a diameter L1, see FIG. 3(b)) of the upper panel 101 is heated by the gas heater, the proportion of the amount of heat energy radiated into a space around the pan 140 in the overall amount of heat energy radiated by the burner 100 and the porous body 105 is small.

However, as shown in FIG. 4(b) of the accompanying drawings, when a pan 141 having a bottom area smaller than the effective heating area of the upper panel 101 is heated by the gas heater, the amount of heat energy radiated into a space around the pan 141 tends to make the cooker uncomfortable 141 and heat handles 143a, 143b of the pan 141 to the extent that the cooker finds it hard to hold the handles 143a, 143b.

EP 0601270-A1 discloses a combustion apparatus provided with a heat recirculating function whereby waste heat generated by a centrally disposed combustion surface can be used to pre-heat porous mats disposed around the combustion burner.

EP 1225 393 - A1 discloses a combustion apparatus according to the preamble of claim 1, provided with a surface combustion burner disposed around the porous body.

Preferred embodiments of the present invention seek to provide a gas heater which is capable of suppressing the radiation of heat energy into a space around an object which is heated by the gas heater, depending on the size of the object.

An embodiment of the present invention is concerned with an improvement over a gas heater for heating an object placed on an upper panel disposed above a combustion chamber of the gas heater, comprising: an air-permeable porous body disposed in said combustion chamber; a combustion burner having a combustion surface disposed in confronting relation to said upper panel; fuel gas supply means for supplying a fuel gas to said combustion burner; an exhaust passage having an end communicating with said combustion chamber through said porous body and an opposite end communicating with an exhaust slot; an air supply/discharge fan for supplying combustion air to said combustion burner and delivering combustion exhaust gases from said combustion burner through said porous body and said exhaust passage to said exhaust slot; characterised by a red-hot area changing means for changing an air-fuel ratio, which represents the ratio of a flow rate of the combustion air supplied by said air supply/discharge fan to said combustion burner to a flow rate of the fuel gas supplied from said fuel gas supply means to said combustion burner, in order to change a red hot area for heating an object placed on said upper panel from an area corresponding to a region above the porous body to an area corresponding to a region above the porous body and the combustion surface, further characterised in that said surface-combustion burner is disposed around said porous body, wherein said red-hot area changing means is operable to increase the air-fuel ratio so that combustion flames produced by the combustion barrier are lifted off the combustion surface and are drawn into the porous body such that the red-hot area corresponds to the area above the porous body.

The inventor of the present invention has found that the effective heating area or "red-hot area" on the upper panel is changed when the ratio between a flow rate of the fuel gas supplied to the burner and a flow rate of the combustion air supplied to the burner is changed at the time the fuel gas is combusted.

As the air-fuel ratio is increased by the effective heating area changing means, combustion flames produced by the burner are lifted off the combustion surface of the burner, and attracted to the porous burner. At this time, since the combustion surface of the burner does not become red hot, the heat radiated upwardly of the burner is reduced. However, because the combustion exhaust gases from the burner are drawn into the porous body and heat the porous body, the porous body emits radiant heat. Consequently, the effective heating area on the upper panel is reduced to an area over the porous body.

The effective heating area changing means comprises means for reducing the effective heating area on the upper panel by setting the air-fuel ratio to a value greater than a predetermined air-fuel ratio which is determined to provide a good combustion efficiency of the burner. The porous body is heated by the combustion exhaust gases emitted from the burner and absorbed by the porous body to at least a temperature required to re-combust unburned gases contained in the combustion exhaust gases.

With the above arrangement of the present invention, when the air-fuel ratio is made higher than the predetermined air-fuel ratio to reduce the effective heating area on the upper panel, the combustion state of the burner is made poor, and the burner emits combustion exhaust gases containing unburned gases due to incomplete combustion. However, the unburned gases are absorbed by the porous body which has been heated by the combustion exhaust gases from the burner, and are re-combusted by the porous body, which radiates heat. As a result, the thermal efficiency of the gas heater as a whole is prevented from being unduly lowered, and the unburned gases are prevented from being discharged from the exhaust slot.

For a better understanding of the present invention, and to show how the same may be carried into effect, reference will now be made, by way of example, to the accompanying drawings, in which:-
FIG. 1(a) is a perspective view of a gas heater according to an embodiment of the present invention;
FIG. 1(b) is a vertical cross-sectional view, partly in block form, of the gas heater shown in FIG. 1(a);
FIGS. 2(a) and 2(b) are vertical cross-sectional views illustrating how effective heating areas of the gas heater shown in FIGS. 1(a) and 1(b) are changed;
FIG. 3(a) is a perspective view of a previously-considered gas heater;
FIG. 3(b) is a vertical cross-sectional view, partly in block form, of the gas heater shown in FIG. 3(a); and
FIGS. 4(a) and 4(b) are vertical cross-sectional views illustrating the manner in which the previously propose gas heater is used.

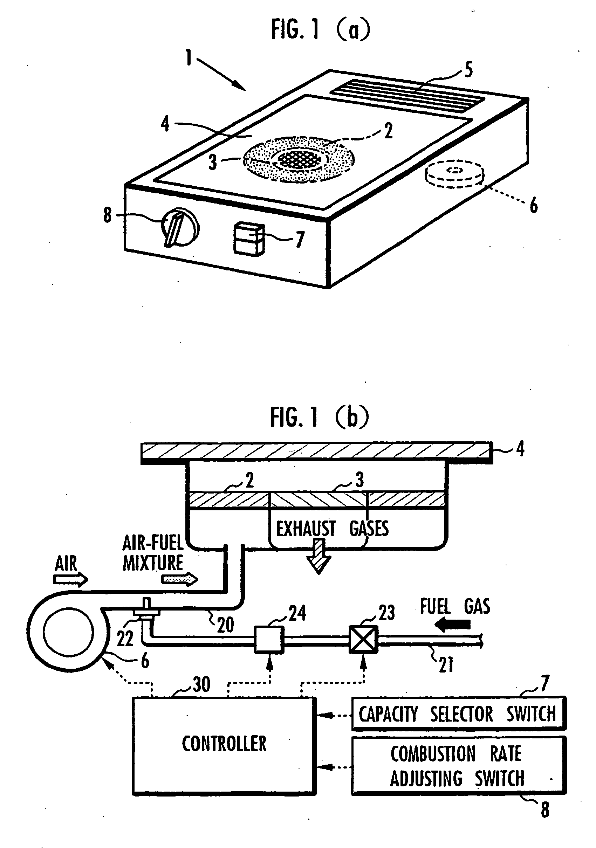

As shown in FIG. 1(a), a gas heater 1 has an annular surface-combustion burner 2 and an air-permeable porous body 3 which are disposed in a combustion chamber and a heat-resistant upper panel 4 of glass disposed above the combustion chamber. The gas heater 1 heats an object that is placed on the upper panel 4 without exposing flames.

The gas heater 1 also has an air supply/ discharge fan 6 for supplying combustion air to the burner 2 and delivering combustion exhaust gases from the burner 2 through the porous body 3 and an exhaust passage (not shown) into an exhaust slot 5, a capacity selector switch 7 for changing effective heating areas of the upper panel 4, and a combustion rate adjusting switch 8 for adjusting the combustion rate of the burner 2.

FIG. 1(b) shows vertical cross section specific structural details of the gas heater illustrated in FIG. 1(a). The burner 2 is supplied with combustion air from an air supply passage 20 by the air supply/discharge fan 6. A fuel gas supplied from a gas supply pipe 21 is injected into the air supply passage 20 from a nozzle 22 mounted on the end of the gas supply pipe 21 which is connected to the air supply passage 20. The gas supply pipe 21 and the nozzle 22 make up a fuel gas supply means according to the present invention.

The gas supply pipe 21 has a main gas valve 23 and a gas proportional valve 24 which are successively disposed in the order named from its upstream end. The gas heater 1 is controlled in operation by a controller 30 whose functions include a function as an effective heating area changing means according to the present invention.

The capacity selector switch 7 and the combustion rate adjusting switch 8 are connected to the controller 30. The controller 30 controls a combustion process carried out by the burner 2 depending on user's actions on the capacity selector switch 7 and the combustion rate adjusting switch 8. When the user shifts the capacity selector switch 7 to a "high capacity" position, the controller 30 sets an air-fuel ratio, i.e., the ratio of the flow rate of the combustion air supplied by the air supply/discharge fan 6 to the burner 2 to the flow rate of the fuel gas supplied from the nozzle 22 to the burner 22, to a predetermined air-fuel ratio (e.g., 1.3) determined for a good combustion efficiency of the burner 2.

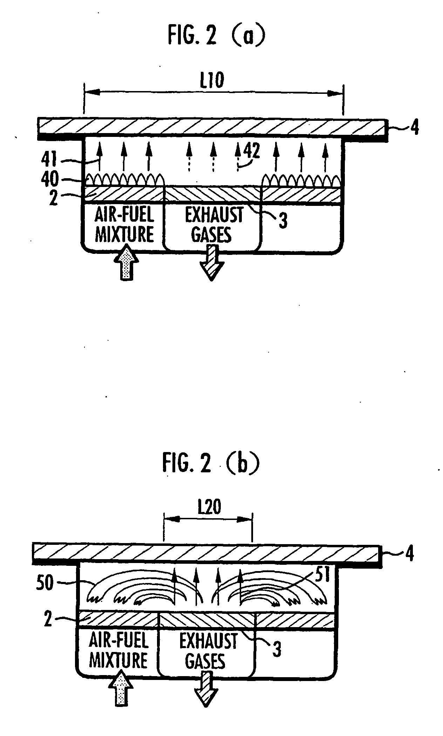

At this time, as shown in FIG. 2(a), good combustion flames 40 are produced on the combustion surface of the burner 2, and the heat 41 generated by the combustion flames 40 is discharged through the upper panel 4. High-temperature combustion exhaust gases produced by the burner 2 are absorbed by the porous body 3, which is heated by the high-temperature combustion exhaust gases and discharges radiant heat 42. Therefore, the upper panel 4 provides an effective heating area which is substantially located within a circle having the diameter (L10 in FIG. 2(a)) of the burner 2.

When the user shifts the capacity selector switch 7 to a "low capacity" position, the controller 30 sets the air-fuel ratio to a value (e.g., in a range from 1.7 to 2.0) that is larger than the predetermined air-fuel ratio (1.3). When the burner 2 combusts the air-rich air-fuel mixture in which the flow rate of the combustion air is excessively large as compared with the flaw rate of the fuel gas, the combustion rate in the burner 2 is lowered. As a result, as shown in FIG. 2(b), the combustion flames 50 produced by the burner 2 are lifted off, i.e., blown away from, the combustion surface of the burner 2, producing blue flames representing incomplete combustion.

Since the blue flames are spaced from the combustion surface of the burner 2, the combustion surface of the burner 2 is not heated. Therefore, the combustion surface of the burner 2 does not become red hot, and the upper panel 4 above the burner 2 does not become hot. High-temperature combustion exhaust gases produced from the lifted combustion flames 50 are absorbed by the porous body 3, which is heated by the high-temperature combustion exhaust gases and becomes red hot, discharging heat through the upper panel 4 above the porous body 3. Therefore, the upper panel 4 provides an effective heating area which is substantially located within a circle having the diameter (L20 in FIG. 2(b)) of the porous body 3. The effective heating area provided by the upper panel 4 at this time is smaller than the effective heating area provided by the upper panel 4 when the capacity selector switch 7 is shifted to the "high capacity" position.

The cooker who uses the gas heater can select one of the above effective heating areas depending on the size of a cooking utensil to be heated, e.g., a pan. When the cooker heats a smaller cooking utensil on the gas heater, the user can select the smaller effective heating area, preventing substantial heat from being radiated from the gas heater into a space around the cooking utensil and hence preventing handles of the cooking utensil from being unduly heated.

When the air-rich air-fuel mixture is supplied to the burner 2, the combustion efficiency of the burner 2 is lowered, and the combustion exhaust gases emitted from the burner 2 contain a large amount of unburned gases due to the incomplete combustion. However, the unburned gases are absorbed by the porous body 3 which has been heated by the combustion exhaust gases from the burner 2 to a high temperature of, e.g., 900°C which corresponds to a temperature required to re-combust the unburned gases. Therefore, the porous body 3 completely combusts the unburned gases and radiates the heat generated by the complete combustion of the unburned gases. As a result, the thermal efficiency of the gas heater is prevented from being unduly lowered due to the air-rich air-fuel mixture supplied to the burner 2, and the unburned gases are prevented from being discharged from the exhaust slot 5.

When the user shifts the capacity selector switch 7 to the "low capacity" position, the air-fuel ratio may be changed in one of the following three alternative processes: (1) The flow rate of the combustion air supplied to the burner 2 is set to the same value as when the capacity selector switch 7 is shifted to the "high capacity" position, and the flow rate of the fuel gas supplied to the burner 2 is reduced. (2) The flow rate of the combustion air supplied to the burner 2 is set to a value smaller than the value which is set when the capacity selector switch 7 is shifted to the "high capacity" position, and the flow rate of the fuel gas supplied to the burner 2 is reduced. (3) The flow rate of the fuel gas supplied to the burner 2 is set to the same value as when the capacity selector switch 7 is shifted to the "high capacity" position, and the flow rate of the combustion air supplied to the burner 2 is increased.

In the illustrated embodiment, the gas heater can provide on the upper panel 4 two alternative effective heating areas which correspond respectively to the "high capacity" position and the "low capacity" position. However, the gas heater may provide on the upper panel 4 three or more alternative effective heating areas. Specifically, the controller 30 may set successively larger air-fuel ratios than the predetermined air-fuel ratio to lift the combustion flames off the burner 2 by successively larger distances therefrom to provide successively smaller effective heating areas on the upper panel 4.

Although a certain preferred embodiment of the present invention has been shown and described in detail, it should be understood that various changes and modifications may be made therein without departing from the scope of the appended claims.

## Claims

1. A gas heater (1) for heating an object placed on an upper panel (4) disposed above a combustion chamber of the gas heater, comprising:
an air-permeable porous body (3) disposed in said combustion chamber;
a combustion burner (2) having a combustion surface disposed in confronting relation to said upper panel, wherein said surface-combustion burner is disposed around said porous body,
fuel gas supply means (21, 22) for supplying a fuel gas to said combustion burner;
an exhaust passage having an end communicating with said combustion chamber through said porous body (3) and an opposite end communicating with an exhaust slot (15);
an air supply/discharge fan (6) for supplying combustion air to said combustion burner (2) and delivering combustion exhaust gases from said combustion burner through said porous body (3) and said exhaust passage to said exhaust slot (5); **characterised by**
a red-hot area changing means (7) for changing an air-fuel ratio, which represents the ratio of a flow rate of the combustion air supplied by said air supply/discharge fan (6) to said combustion burner (2) to a flow rate of the fuel gas supplied from said fuel gas supply means to said combustion burner, in order to change a red hot area for heating an object placed on said upper panel from an area (L20) corresponding to a region above the porous body to an area (L10) corresponding to a region above the porous body and the combustion surface, further **characterised in that** said red-hot area changing means is operable to increase the air-fuel ratio so that combustion flames produced by the combustion burner are lifted off the combustion surface and are drawn into the porous body such that the red-hot area corresponds to the area (L20) above the porous body (3).

2. A gas heater according to claim 1, wherein said red-hot area adjusting means (7) comprises means for reducing the red-hot area (L10; L20) on said upper panel (4) by setting said air-fuel ratio to a value greater than a predetermined air-fuel ratio which is determined to provide a good combustion efficiency of said combustion burner (2), wherein said porous body (3) is heated by the combustion exhaust gases emitted from said burner (2) and absorbed by said porous body to at least a temperature required to recombust unburned gases contained in said combustion exhaust gases.

## Patentansprüche

1. Gasherd (1) zum Erhitzen eines Objekts, das auf einer oberen Platte (4) platziert ist, die oberhalb einer Verbrennungskammer des Gasherds angeordnet ist, umfassend:
einen luftdurchlässigen porösen Körper (3), der in der Verbrennungskammer angeordnet ist;
einen Brenner (2) mit einer Verbrennungsoberfläche, die in gegenüberliegender Beziehung zu der oberen Platte angeordnet ist, wobei der Oberflächenbrenner um den porösen Körper herum angeordnet ist;
Brennstoffzuführmittel (21, 22) zum Zuführen eines Brennstoffs zu dem Brenner;
einen Ausstoßdurchgang mit einem Ende, das mit der Verbrennungskammer durch den porösen Körper (3) kommuniziert, und einem gegenüberliegenden Ende, das mit einem Ausstoßschlitz (15) kommuniziert;
ein Luft-Zuführ/Abführ-Gebläse (6) zum Zuführen von Verbrennungsluft zu dem Brenner (2) und Transportieren von Verbrennungsausstoßgasen von dem Brenner durch den porösen Körper(3) und den Ausstoßdurchgang zu dem Ausstoßschlitz (5); **gekennzeichnet durch**
ein rot-heiß Flächenveränderungsmittel (7) zum Verändern eines Luft-Brennstoff Verhältnisses, welches das Verhältnis einer Flussrate der **durch** das Luft Zuführ/Abführ-Gebläse (6) zum Brenner (2) zugeführten Verbrennungsluft zu einer Flussrate des von dem Brennstoffzuführmittel zu dem Brenner zugeführten Brennstoffs wiedergibt, um eine rot-heiß Fläche zum Erhitzen eines auf der oberen Platte platzierten Objekts von einer Fläche (L20), die einem Abschnitt oberhalb des porösen Körpers entspricht, zu einer Fläche (L10), die einem Abschnitt oberhalb des porösen Körpers und der Verbrennungsoberfläche entspricht, zu verändern, ferner **dadurch gekennzeichnet, dass** das rot-heiß Flächenveränderungsmittel betreibbar ist, um das Luft-Brennstoff-Verhältnis so zu erhöhen, dass Verbrennungsflammen, die durch den Brenner erzeugt werden, von der Verbrennungsoberfläche abgehoben und in den porösen Körper gezogen werden, so dass die rot-heiß Fläche der Fläche (L20) oberhalb des porösen Körpers (3) entspricht.

2. Gasherd nach Anspruch 1, wobei das rot-heiß Flächenanpassungsmittel (7) Mittel zum Verringern der rotheißen Fläche (L10; L20) auf der oberen Platte (4) durch Einstellen des Luft-Brennstoffverhältnisses auf einen größeren Wert als ein vorbestimmtes Luft-Brennstoffverhältnis, das dazu bestimmt ist eine gute Verbrennungseffizienz des Brenners (2) zur Verfügung zu stellen, aufweist, wobei der poröse Körper (3) durch die Verbrennungsausstoßgase, die von dem Brenner (2) ausgegeben und durch den porösen Körper absorbiert werden, auf zumindest eine Temperatur erhitzt wird, die benötigt wird, um unverbrannte Gase, die in den Verbrennungsausstoßgasen enthalten sind, wieder zu verbrennen.

## Revendications

1. Appareil de chauffage au gaz (1) pour chauffer un objet placé sur un panneau supérieur (4) disposé au-dessus d'une chambre de combustion de l'appareil de chauffage au gaz, comprenant :
- un corps poreux perméable à l'air (3) disposé dans ladite chambre de combustion ;
- un brûleur de combustion (2) ayant une surface de combustion disposée en relation de confrontation avec ledit panneau supérieur, pour lequel ledit brûleur de combustion de surface est disposé autour dudit corps poreux ;
- des moyens d'alimentation en gaz combustible (21, 22) pour délivrer un gaz combustible audit brûleur de combustion ;
- un passage d'évacuation ayant une extrémité communiquant avec ladite chambre de combustion par l'intermédiaire dudit corps poreux (3) et une extrémité opposée communiquant avec une fente d'évacuation (15) ;
- une soufflerie d'alimentation en air / décharge (6) pour alimenter en air de combustion ledit brûleur de combustion (2) et délivrer des gaz d'évacuation de combustion provenant dudit brûleur de combustion, par l'intermédiaire dudit corps poreux (3) et dudit passage d'évacuation, à ladite fente d'évacuation (5) ; **caractérisé par**
- des moyens de changement de zone chauffée au rouge (7) pour changer un rapport air / combustible, qui représente le rapport d'un débit de l'air de combustion, délivré par ladite soufflerie d'alimentation en air / décharge (6) audit brûleur de combustion (2), à un débit du gaz combustible délivré, en provenance desdits moyens d'alimentation en gaz combustible, audit brûleur de combustion, afin de changer une zone chauffée au rouge pour chauffer un objet placé sur ledit panneau supérieur, à partir d'une zone (L20) correspondant à une région au-dessus du corps poreux, en une zone (L10) correspondant à une région au-dessus du corps poreux et de la surface de combustion, en outre **caractérisé en ce que** lesdits moyens de changement de zone chauffée au rouge peuvent être mis en oeuvre pour accroître le rapport air / combustible, de sorte que des flammes de combustion produites par le brûleur de combustion sont soulevées pour quitter la surface de combustion et être attirées dans le corps poreux, de sorte que la zone chauffée au rouge corresponde à la zone (L20) au-dessus du corps poreux (3).

2. Appareil de chauffage au gaz selon la revendication 1, dans lequel lesdits moyens d'ajustement de zone chauffée au rouge (7) comprennent des moyens pour réduire la zone chauffée au rouge (L10 ; L20) sur ledit panneau supérieur (4) en établissant ledit rapport air / combustible à une valeur supérieure à un rapport air / combustible prédéterminé qui est déterminé pour procurer un bon rendement de combustion audit brûleur de combustion (2), dans lequel ledit corps poreux (3) est chauffé par les gaz d'évacuation de combustion émis à partir dudit brûleur (2) et absorbés par ledit corps poreux à au moins une température requise pour rebrûler des gaz non-brûlés contenus dans lesdits gaz d'évacuation de combustion.
